# EUROPÄISCHE PATENTSCHRIFT

(11) **EP 2 552 662 B1**
(45) Veröffentlichungstag und Bekanntmachung des Hinweises auf die Patenterteilung: **29.07.2015**
(21) Anmeldenummer: 11711529.5
(22) Anmeldetag: 28.03.2011
(51) Int. Cl.: B29C 33/48, B29C 31/08, B29C 70/46, B29L 31/30

(54) **EINRICHTUNG UND VERFAHREN ZUR HERSTELLUNG MEHRFACH GEWÖLBTER STRUKTURBAUTEILE AUS EINEM FASERVERBUNDWERKSTOFF**
INSTALLATION AND METHOD FOR PRODUCING MULTIPLY CURVED STRUCTURAL COMPONENTS FROM A FIBER COMPOSITE MATERIAL
DISPOSITIF ET PROCÉDÉ DE PRODUCTION D'ÉLÉMENTS STRUCTURELS À MULTIPLES INCURVATIONS RÉALISÉS DANS UN MATÉRIAU COMPOSITE RENFORCÉ AUX FIBRES

(30) Priorität: 30.03.2010 US 318920 P; 30.03.2010 DE 102010013478
(43) Veröffentlichungstag der Anmeldung: 06.02.2013
(73) Patentinhaber: Airbus Operations GmbH, 21129 Hamburg (DE)
(72) Erfinder: LONSDORFER, Georg, 21282 Stade (DE); WACHENDORF, Adrian, 31199 Söhre (DE); HINZ, Remo, 21682 Stade (DE); DESCHAUER, Niels, 79100 Freiburg (DE); ANDRÄ, Adam, 79102 Freiburg (DE)
(74) Vertreter: Maiwald Patentanwalts GmbH
(86) Internationale Anmeldenummer: PCT/EP2011/054717
(87) Internationale Veröffentlichungsnummer: WO 2011/124491

(56) Entgegenhaltungen:
- GB-A- 1 389 212
- US-A- 4 527 783
- US-A- 5 217 669

## Beschreibung

### GEBIET DER ERFINDUNG

Die vorliegende Erfindung betrifft eine Einrichtung zur Herstellung großflächig dreidimensional gewölbter Strukturbauteile aus einem Faserverbundwerkstoff, umfassend eine belegte Aufrüstvorrichtung mit einer nach außen gewölbten Montagefläche und eine korrespondierend hierzu geformte Laminierklebevorrichtung, wobei die Aufrüstvorrichtung Aufnahmekanäle zum Einlegen von Bauteilkomponenten aufweist und mit Hilfsstoffen belegbar ist, um durch ein Zusammenwirken mit der Laminierklebevorrichtung das Strukturbauteil unter Druck auszuformen.

Das Einsatzgebiet der vorliegenden Erfindung erstreckt sich vornehmlich auf den Flugzeugbau. Insbesondere Verkehrs- oder Transportflugzeuge mit großvolumigen Rümpfen können in Schalenbauweise, insbesondere Halbschalenbauweise, gefertigt werden. Unter Halbschalenbauweise wird im Flugzeugbau der Aufbau des Rumpfes in meist zwei Schalen verstanden. Zusammengefügt ergeben die beiden Schalen einen nahezu runden oder ovalen Querschnitt eines Rumpfabschnittes. Mehrere Rumpfabschnitte - für Heck, Rumpfmitte und Cockpitsektion hintereinander - ergeben den gesamten Flugzeugrumpf. Vermehrt kommen zur Herstellung von Flugzeugrümpfen geeignete Faserverbundwerkstoffe, wie glasfaser- oder kohlefaserverstärkt Kunststoffe, zum Einsatz. Um den Rumpf zu versteifen und die Lasten aufnehmen zu können, werden die Schalen üblicherweise mit Versteifungsstreben ausgerüstet, insbesondere Stringern und Streben.

Bei dem hier interessierenden Fertigungsprinzip wird das schalenförmige Strukturbauteil in einer Negativklebeform, einer sogenannten Laminierklebevorrichtung (LKV) produziert, indem dort Fasermaterial und Harz in verschiedenen Schichten eingebracht und ausgehärtet werden. Die LKV wirkt dabei mit einer Aufrüstvorrichtung (ARV) zusammen, welche der Vorbereitung des Schichtaufbaus der Hautlagen nebst Positionierung der in den Schichtaufbau eingeklebten Bauteilkomponenten dient, wie insbesondere Stringern, Fenster- und Türrahmen und dergleichen. Letztlich gibt die LKV die entsprechende Außenkontur vor und sorgt für eine glatte Außenoberfläche des schalenförmigen Strukturbauteils.

Mehrfach - insbesondere zweifach - gewölbte schalenförmige Strukturbauteile für Flugzeugrümpfe besitzen neben einer Wölbung in Rumpfquerschnittsrichtung auch eine deutliche Wölbung quer hiervon, nämlich in Rumpflängsrichtung, die allerdings meist weniger gekrümmt ausfällt. Die vorliegende Erfindung widmet sich der Herstellung derartig spezieller Strukturbauteile. Die zur Versteifung verwendeten Bauteilkomponenten Stringer, Streben, aber auch Clips, Fenster- und Türrahmen können, müssen aber nicht im ausgehärteten Zustand mit der hier beschriebenen Vorrichtung verbaut werden. Es ist auch eine Verwendung von vorgeformten Bauteilkomponenten, sogenannten Preforms, möglich.

### HINTERGRUND DER ERFINDUNG

Aus der DE 103 31 358 A1 geht eine Vorrichtung der vorstehend geschilderten Art hervor, die im Prinzip aus einer LKV und einer hiermit korrespondierenden ARV besteht. Die ARV besteht im Wesentlichen aus einem ebenen Basisträger, an dem eine Raster von mehreren Stützwänden unterschiedlicher Länge derart befestigt ist, dass deren distale Enden über jeweils hieran befestigte modulare Profilteile eine nach außen gewölbte Montagefläche bilden, wobei Zwischenräume dem Einlegen von Stringern dienen. Die gewölbte Montagefläche entspricht dabei im Wesentlichen der Innenkontur des herzustellenden integralen Strukturbauteils im Negativ. Der Spalt zwischen einander benachbarten modularen Profilteile ist jeweils unter der Position eines Stringers angeordnet. Eine passende LKV wird nach Erstellen des kompletten Aufbaus des Strukturbauteils und der Hilfsstoffe auf der ARV oberhalb dieser passgenau aufgelegt um das Strukturbauteil letztlich auszuformen.

Zu Beginn des Herstellungsprozesses wird zunächst die Montagefläche der ARV mit einer Folie abgedeckt. Der durch die Aufnahmekanäle gebildete Hohlraum wird mit einem Vakuum derart beaufschlagt, dass die Folie mit glatt auf die Montagefläche gesaugt wird. Danach wird die Rolle der Folie der Rolle einer Vakuumhaut derart gekoppelt, dass die Folie aufgerollt und die Vakuumhaut auf die gewölbte Montagefläche abgerollt und formtreu in die Aufnahmekanäle der Stringer eingezogen wird. In die von der Vakuumhaut bedeckten Aufnahmekanäle werden anschließend mit Stützelementen versehende Stringer eingelegt. Anschließend werden auf die von der Vakuumhaut bedeckten äußeren Oberflächenbereiche der modularen Profile und der Stringer alle Hautschichten aus Faserverbundwerkstoffen aufgelegt. Auf die äußerste Hautschicht wird die Siegelmasse in optimierter Menge aufgetragen und anschließend wird eine um 180° gedrehte LKV passgenau aufgelegt, welche die umlaufende Siegelmasse derart verdichtet, dass eine vakuumdichte Siegelung zwischen der Vakuumhaut und der LKV entsteht sowie die Kavitäten zwischen der Vakuumhaut und der LKV evakuiert werden. Nach Erreichen des vorgesehenen Prozessvakuums zwischen der Außenhaut und der LKV wird das Vakuum in dem durch die Zwischenräume gebildeten Hohlraum abgeschaltet, sowie zur Atmosphäre hin geöffnet. Die LKV mit dem hierin nach Übergabe von der ARV angeordneten Strukturbauteil wird anschließend angehoben, um 180° gedreht und einem nachfolgenden Injektions- und Härtungsprozess zugeführt.

Beim Trennen der LKV von der ARV tritt durch Wölbung des Strukturbauteils in Verbindung mit den innenseitig längs verlaufenden Stringern gegenüber den zugeordneten Aufnahmekanälen an der ARV eine sogenannte Hinterschnittproblematik auf, welche je nach Wölbungsgrad des Strukturbauteils aufgrund eines hinderlichen Formschlusses ein Entformen behindern könnte. Daher wird bei diesem Stand der Technik vorgeschlagen, die Aufnahmekanäle für die Stringer seitens der ARV so zu gestalten, dass sich zur Vertikalen keine Hinterschneidungen ergeben. Nachteilhaft hierbei ist jedoch, dass der Wölbungsgrad des Strukturbauteils stark beschränkt ist von der Machbarkeit einer Entformung aufgrund der Hinterschnittproblematik. Denn durch die Hinterschnittproblematik kann bei herkömmlichen ARV ab einer bestimmten Schalenwölbung die nach Übergabe der Stringer auf eine in der LKV liegende Haut nicht mehr aus der LKV gefahren werden, ohne dabei mit den Stringern zu kollidieren.

Zur Lösung dieses Problems ist es bereits versucht worden, Teile der die gewölbte Montagefläche der ARV bildenden modularen Profile in Radialrichtung verschiebbar auszubilden, um durch Einfahren der im Hinterschneidungsbereich gelegenen modularen Profile die dort bestehenden Hinterschnitte zu überwinden. Allerdings verursacht diese technische Lösung einen erheblichen Aufwand zur Realisierung der Bewegbarkeit der betreffenden einzelnen modularen Profile der gewölbten Montagefläche, welche sich gewöhnlich im Randbereich derselben befinden.

Die dreidimensionale Wölbung eines schalenförmigen Strukturbauteils verschärft die Hinterschnittproblematik beim hier interessierenden Fertigungsprinzip. Außerdem kann es wölbungsbedingt durch Schwerkrafteinwirkung beim Bewegen der meist sehr langbauenden und schweren ARV zu störenden nach Außen oder Innen gerichteten Ausbeulungen oder Durchbiegungen der Montagefläche der ARV kommen.

Aus der Druckschrift US 4 527 783 A geht eine Einrichtung mit einer Montagefläche hervor. Die Montagefläche besteht aus flexiblen Bändern, die über Festhaltemittel in Form von Saugnäpfen punktförmig auf ein auszuformendes Strukturbauteil einwirken. Somit erfolgt lediglich eine punktförmige Abstützung des Strukturbauteils an den Saugnäpfen.

Des Weiteren geht aus dem Dokument US 5 217 669 A ein Verfahren zur Herstellung eines Schalenbauteils und das dadurch erzeugte Schalenbauteil hervor. Dabei besteht eine Montagefläche aus einer einzigen Montageschale.

Es ist daher die Aufgabe der vorliegenden Erfindung eine Einrichtung zur Herstellung großflächig mehrfach gewölbter Strukturbauteile zu schaffen, welche mit einfachen technischen Mitteln eine effiziente Automatisierung unter Lösung der Hinterschnittproblematik gestattet.

### ZUSAMMENFASSUNG DER ERFINDUNG

Die Aufgabe wird ausgehend von einer Einrichtung gemäß dem Oberbegriff von Anspruch 1 in Verbindung mit dessen kennzeichnenden Merkmalen gelöst. Verfahrenstechnisch wird die Aufgabe durch die Merkmale von Anspruch 10 gelöst. Die jeweils rückbezogenen abhängigen Ansprüche geben vorteilhafte Weiterbildungen der Erfindung wieder.

Die Erfindung schließt die technische Lehre ein, dass die Montagefläche aus mehreren jeweils elastisch verformbaren Montageschalenteilen gebildet ist, die entlang zumindest einer längsverlaufenden Teilungslinie benachbart zueinander angeordnet sind und an mehreren schaleninnenseitig quer zur zumindest einen Teilungslinie verlaufenden elastisch verformbaren Trägerspanten angebracht sind, worüber die Montagefläche über mehrere Aktuatoren zwischen einer ausgefahrenen Stellung A und mindestens einer eingefahrenen Stellung B verformbar ist, um die Aufrüstvorrichtung bezüglich der Aufnahmekanäle hinterschneidungsfrei aus der Laminierklebevorrichtung auszufahren.

Der Vorteil der erfindungsgermäßen Lösung liegt insbesondere darin, dass durch die Teilungsstruktur der Montageschale in Verbindung mit den die erforderliche Steifigkeit herbeiführenden Trägerspanten eine großflächig insbesondere zweifach gewölbte Montagefläche einer ARV darstellbar ist, welche aufgrund ihrer Schalenteilung und - lagerung ein undefiniertes lokales Verformen der Montagefläche verhindert. Im Rahmen der erfindungsgemäßen Lösung sollte zumindest eine längs verlaufende Teilungslinie existieren. Die einzelnen Montageschalenteile sollten dabei mit speziellen Verbindungselementen an den Trägerspanten befestigt sein, die jedes Montageschalenteil in Tiefen- und Querrichtung bezüglich der gewölbten Montagefläche an mindestens einem Punkt fixieren, jedoch in Längsrichtung - der Rumpfachse entsprechend - freigängig sind.

Je nach Flächenerstreckung des herzustellenden Strukturbauteils können auch mehrere Teilungslinien erforderlich sein. Bei einer beispielsweise 5-schaligen Ausbildung der Montagefläche sind vier Teilungslinien vorhanden, die vorzugsweise benachbart zueinander angeordnet sind. Es ist jedoch auch denkbar, quer verlaufende Teilungslinien vorzusehen. Bei symmetrisch konstruierten Strukturbauteilen sollte die Teilung bezüglich jeder Montageflächenhälfte spiegelsymmetrisch angeordnet sein, um eine gleichmäßige Verformung der Montagefläche zwischen der ausgefahrenen Stellung A und der eingefahrenen Stellung B zu ermöglichen. Je ausgeprägter die dreidimensionale Struktur des Strukturbauteils ist, desto anfälliger gegen undefinierte lokale Verformungen ist die Montagefläche und desto mehr Teilungslinien sind in der Regel zur Ausbildung der Montagefläche der ARV erforderlich. Somit kann im Rahmen der vorliegenden Erfindung die Anzahl der Montageschalenteile variieren. Auch die Anzahl der Aufnahmekanäle zum Einlegen von Bauteilkomponenten, insbesondere Stringern pro Montageschalenteil kann variieren. Die über die elastisch verformbaren Trägerspanten, welche eine Art Querversteifungen bilden, verbundenen einzelnen Montageschalenteile sind an den Grenzstellen der Teilungslinien über eine flexible Haut abzudichten, um eine durchgängige Montagefläche zu schaffen. Die Verformung der so ausgebildeten erfindungsgemäßen Montagefläche der ARV erfolgt teilweise über die Trägerspanten und teilweise die Montageschalenteile. Dabei kann der jeweilige Anteil an der Verformung variieren. Die erfindungsgemäß ausgebildete Montagefläche lässt sich durch Aufbringen der Stellungskräfte soweit elastisch verformen, dass die ARV ohne Kollision bis auf die in der LKV liegende Schalenhaut gefahren werden kann.

Die in der Regel zur Versteifung des großflächig dreidimensional gewölbten Strukturbauteils verwendeten Bauteilkomponenten sind Stringer, die vorzugsweise als T-Stringer oder als Ω-Stringer ausgebildet sein können. Diese Stringer sind in der Regel beabstandet zueinander in längsverlaufenden Aufnahmekanäle der Montagefläche einlegbar. Mit anderen Worten sind die Aufnahmekanäle im Wesentlichen in Rumpflängsrichtung angeordnet.

Die Montagefläche der ARV ist zumindest teilweise aus Montageschalenteilen gebildet, welche einen oder mehrere Aufnahmekanäle für Stringer als Bauteilkomponenten besitzen. Daneben müssen nicht alle Montageschalenteile mit Aufnahmekanälen ausgestattet sein. Es ist im Rahmen der erfindungsgemäßen Lösung auch denkbar, dass die Bauteilkomponenten als Fensterrahmen zur Bildung eines Kabinenfensters ausgebildet sind, die in beabstandet zueinander in einer Reihe angeordnete ringartigen Aufnahmekanälen der Montagefläche eingelegt werden. Im Falle von Fensterrahmen kann beispielsweise randseitig der Montagefläche je ein Montageschalenteil vorgesehen werden, das solche ringartigen Aufnahmekanäle für Fensterrahmen bereitstellt.

Gemäß einer speziellen Ausführungsform der erfindungsgemäßen Lösung wird vorgeschlagen, dass jedes Montageschalenteil mit einem einzigen je zugeordneten Aufnahmekanal, vorzugsweise für Stringer, versehen ist. Hierdurch fallen die einzelnen Montageschalenteile recht schmalbauend aus; es wird jedoch ein Höchstmaß an Flexibilität der Gesamteinrichtung erzielt. Im Prinzip wird bei dieser speziellen Ausführungsform die Anzahl der Montageschalenteile durch die Anzahl der zu integrierenden Bauteilkomponenten (Stringer) bestimmt.

Gemäß einer anderen, die Erfindung verbessernden Maßnahme wird vorgeschlagen, dass die innenseitig an der Montagefläche an den elastisch verformbaren Trägerspanten angelenkten Aktuatoren zueinander beabstandet entlang beider einander gegenüberliegender Randbereiche der Montageschale angeordnet sind. Diese Platzierung am Randbereich der Montagefläche hat sich zur Verstellung der Montagefläche zwischen der ausgefahrenen Stellung A und der eingefahrenen Stellung B als günstig erwiesen. Dabei sollten die Aktuatoren in ihrer Längserstreckung nach vorzugsweise radial innen ausgerichtet sein und innenseitig an einer ortsfesten Trägerkonstruktion angelenkt sein. Hierdurch ergeben sich eine bauraumsparende äußere geometrische Abmessung der ARV. Als Aktuatoren können beispielsweise Pneumatikzylinder oder elektrische Linearantriebe verwendet werden.

Mit der vorstehend beschriebenen speziellen Einrichtung zur Herstellung großflächig dreidimensional gewölbter Strukturbauteile lassen diese sich durch die Abfolge folgender Verfahrensschritte in einfacher Weise herstellen:
- Die Montagefläche der belegten und nach unten gewölbten ARV wird über Krafteinwirkung auf die Trägerspanten nach radial innen verformt und durch Einfahren mit der korrespondierenden LKV zusammengebracht,
- die Montagefläche der gewendeten ARV wird wieder zurück verformt, um die Bauteilkomponentenübergabe, insbesondere der Stringer, an die LKV einzuleiten, und
- die über die Montageschalenteile elastische Montagefläche der ARV wird wieder nach innen verformt, um die ARV hinterschneidungsfrei aus der LKV auszufahren.

Durch die Abfolge dieser wenigen Verfahrensschritte lassen sich gewölbte Strukturbauteile aus Faserverbundwerkstoff in hoher Qualität herstellen.

Zur Vorbereitung der ARV wird gemäß einigen den vorstehend erläuterten Hauptverfahrensschritten vorangestellten Verfahrensschritten vorgeschlagen, dass:
die sich in der nach oben gewölbten Ausgangslange befindliche elastisch nach innen verformte Montagefläche der ARV mit den Bauteilkomponenten und Hilfsstoffen belegt wird, um dann
gewendet zu werden, so dass diese in eine nach unten gewölbte Arbeitslage zum anschließenden Einführen in die korrespondierende LKV gelangt.

Hierdurch lässt sich die ARV bequem manuell mit den Bauteilkomponenten und Hilfsstoffen bestücken.

### KURZE BESCHREIBUNG DER ZEICHNUNGEN

Weitere, die Erfindung verbessernde Maßnahmen werden nachstehend gemeinsam mit der Beschreibung zweier bevorzugter Ausführungsbeispiele der Einrichtung anhand der Figuren näher dargestellt.

Es zeigt:
- Figur 1: eine schematische Seitenansicht eines Flugzeugs mit einem großvolumigen Rumpf, der aus einzelnen Rumpfschalen besteht,
- Figur 2a: eine schematische Darstellung einer ARV mit verformbarer Montagefläche in einer ersten Ausführungsform,
- Figur 2b: eine schematische Darstellung einer ARV mit verformbarer Montagefläche in einer zweiten Ausführungsform.
- Figur 3: einen ersten Verfahrensschritt zur Herstellung eines gewölbten Strukturbauteils,
- Figur 4: einen zweiten Verfahrensschritt zur Herstellung eines gewölbten Strukturbauteils,
- Figur 5: einen dritten Verfahrensschritt zur Herstellung eines gewölbten Strukturbauteils, und
- Figur 6: einen vierten Verfahrensschritt zur Herstellung eines gewölbten Strukturbauteils.

### DETAILLIERTE BESCHREIBUNG BEISPIELHAFTER AUSFÜHRUNGSFORMEN

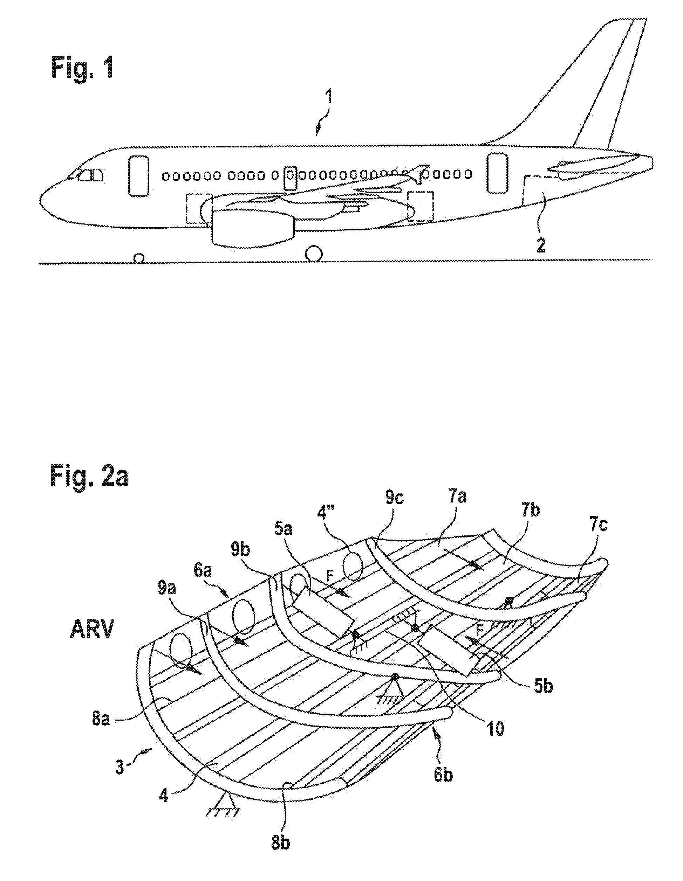

Gemäß Figur 1 besitzt das dargestellte Verkehrsflugzeug einen großvolumigen Rumpf, der in Schalenbauweise hergestellt auch eine hintere dreidimensionale gewölbte Rumpfschale 2 umfasst.

Dieses Strukturbauteil wird mittels einer ARV gemäß Figur 2a hergestellt, welche eine nach außen gewölbte Montagefläche 3 aufweist. Außen über die Montagefläche 3 verlaufen mehrere beabstandet zueinander angeordnete Aufnahmekanäle 4 zum Einlegen von Stringern als Bauteilkomponenten, welche gemeinsam mit den auf die Montagefläche 3 aufzubringenden Hilfsstoffen am Ende des Herstellungsprozesses das dreidimensional gewölbte Strukturbauteil bilden.

Die nach außen gewölbte hier unterhalb der gezeigten ARV angeordneten Montagefläche 3 lässt sich randseitig nach innen elastisch verformen, wie durch die beiden einander gegenüberliegenden Pfeilreihen angedeutet ist. Hierzu sind mehrere innenseitig angelenkte Aktuatoren 5a, 5b (exemplarisch) vorgesehen, um die Montagefläche 3 von der hier dargestellten ausgefahrenen Stellung in eine eingefahrene Stellung zu bewegen. Die Aktuatoren 5a, 5b sind zur Mitte hin an einer gemeinsamen Trägerkonstruktion 10 angebracht. In der eingefahrenen Stellung ist ein hinterschneidungsfreies Zusammenwirken mit einer - hier nicht weiter dargestellten - LKV möglich. Zur Realisierung dieser Verformbarkeit besteht die Montagefläche 3 aus mehreren elastisch verformbaren Montageschalenteilen 7a-7c, welche durch zwei Trennungslinien 8a bzw. 8b getrennt die gesamte Montagefläche 3 der ARV bilden. Dabei liegt die eine Teilungslinie 8a zwischen den Montageschalenteilen 7a und 7b und die andere Teilungslinie 8b liegt zwischen den Montageschalenteilen 7b und 7c. Die drei Montageschalenteile 7a-7c sind an mehreren schaleninnenseitig quer verlaufenden elastisch verformbaren Trägerspanten 9a und 9b (exemplarisch) angebracht. Die Trägerspante 9a und 9b halten die drei Montageschalenteile 7a-7c in ihrer Solllage. Die Aktuatoren 5a und 5b (exemplarisch) greifen an den beiden Enden der Trägerspanten 9a-9c an, um hierüber die elastische Verformung der Montagefläche 3 zu bewirken.

Jedes Montageschalenteil 7a-7c ist mit Aufnahmekanälen 4 für Stringer ausgestattet. Daneben besitzen die randseitigen Montageschalenteile 7a und 7c ringförmige Aufnahmekanäle 4" für Fensterrahmen.

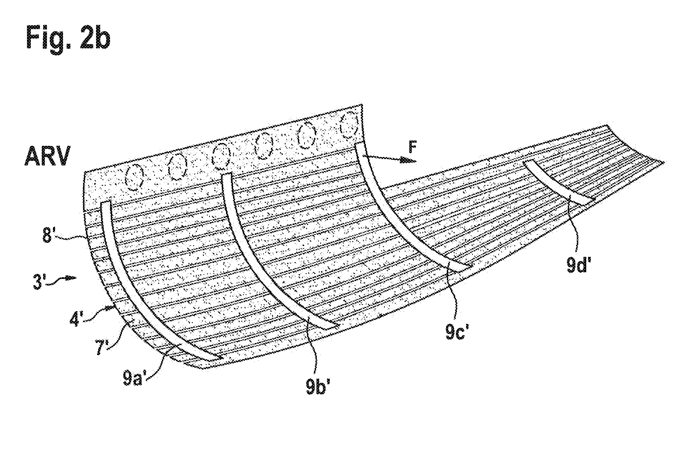

Bei der in Figur 2b dargestellten alternativen Ausführungsform einer ARV ist jedes schmalbauende Montageschalenteil 7' mit einem je zugeordneten Aufnahmekanal 4' versehen, so dass sich eine Art Wikingerbeplankung der Trägerspanten 9a'-9d' ergibt, welche die Montagefläche 3' bilden. Dementsprechend viele längsverlaufende Teilungslinien 8' sind vorhanden. Ansonsten entspricht diese Ausführungsform der ARV hinsichtlich der Verstellmechanik zur Bewegung zwischen der ausgefahrenen Stellung A und der eingefahrenen Stellung B der vorstehend beschriebenen Ausführungsform.

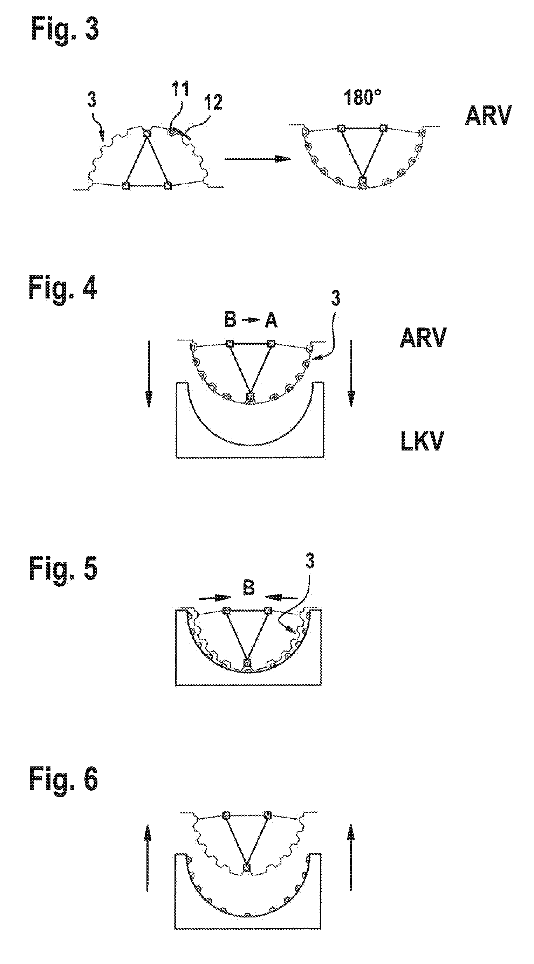

Nach Figur 3 wird zur Herstellung des großflächigen und im Wesentlichen mehrfach gewölbten Strukturbauteils unter Zuhilfenahme der vorstehend beschriebenen ARV die sich in der nach oben gewölbten Ausgangslage befindliche Montageschale 3 mit Stringern 11 und Hilfsstoffen 12 in Form von Fasermatten und gegebenenfalls weiterer Hilfsmittel, wie Positionierelemente oder Druckstücke, belegt. Wie dargestellt wird die so belegte Montageschale 3 anschließend nach Evakuieren um 180° gewendet, so dass diese in eine nach unten gewölbte Arbeitslage gelangt. Durch das an sich bekannte Vakuumverfahren bleiben die Stringer 8 mit den Hilfsstoffen 9 an der Montageschale 3 haften.

Anschließend wird gemäß Figur 4 die Montageschale 3 der belegten und nach unten gewölbten ARV nach radial innen in die eingefahrene Stellung B verformt, um diese in eine unterhalb hiervon positionierte korrespondierende LKV einzufahren. Im eingefahrenen Zustand wird die ARV wieder in die ausgefahrene Stellung A überführt. Nun erfolgt die Stringerübergabe samt Hilfsstoffen an die LKV. Hierfür wird seitens der LKV Vakuum gezogen und es erfolgt eine Entlüftung seitens der ARV.

Nachfolgend wird gemäß Figur 5 die elastische Montageschale 3 der gewendeten ARV wieder nach innen verformt, bis diese in die eingefahrene Stellung B gelangt, um letztlich die ARV hinterschneidungsfrei wieder aus der LKV auszufahren, wie Figur 6 zeigt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Rumpf
- 2: Rumpfschale
- 3: Montagefläche
- 4: Aufnahmekanal
- 5: Aktuator
- 6: Randbereich
- 7: Montageschalenteil
- 8: Trennungslinie
- 9: Trägerspant
- 10: Trägerkonstruktion
- 11: Stringer
- 12: Hilfsstoff

- ARV: Aufrüstvorrichtung
- LKV: Laminierklebevorrichtung
- A: ausgefahrene Stellung der ARV
- B: eingefahrene Stellung der ARV

## Patentansprüche

1. Einrichtung zur Herstellung großflächig dreidimensional gewölbter Strukturbauteile aus einem Faserverbundwerkstoff, umfassend eine belegte Aufrüstvorrichtung (ARV) mit einer nach außen gewölbten Montagefläche (3, 3') und eine korrespondierend hierzu geformte Laminierklebevorrichtung (LKV), wobei die Aufrüstvorrichtung (ARV) Aufnahmekanäle (4, 4') zum Einlegen von Bauteilkomponenten aufweist und mit Hilfsstoffen belegbar ist, um durch ein Zusammenwirken mit der Laminierklebevorrichtung (LKV) das Strukturbauteil unter Druck auszuformen,
**dadurch gekennzeichnet, dass** die Montagefläche (3, 3') aus mehreren jeweils elastisch verformbaren Montageschalenteilen (7a-7c; 7') gebildet ist, die entlang zumindest einer längsverlaufenden Teilungslinie (8a, 8b; 8') benachbart zueinander angeordnet sind und an mehreren schaleninnenseitig quer zur zumindest einen Teilungslinie (8a, 8b) verlaufenden elastisch verformbaren Trägerspanten (9a-9c; 9a'-9d') angebracht sind, worüber die Montagefläche (3, 3') über mehrere Aktuatoren (5a, 5b) zwischen einer ausgefahrenen Stellung (A) und mindestens einer eingefahrenen Stellung (B) verformbar ist, um die Aufrüstvorrichtung (ARV) bezüglich der Aufnahmekanäle (4, 4') hinterschneidungsfrei aus der Laminierklebevorrichtung (LKV) auszufahren.

2. Einrichtung nach Anspruch 1,
**dadurch gekennzeichnet, dass** zumindest ein Teil der Montageschalenteile (7a-7c; 7') mit mehreren Aufnahmekanälen (4, 4') für Stringer als Bauteilkomponente ausgestattet ist.

3. Einrichtung nach Anspruch 1,
**dadurch gekennzeichnet, dass** jedes Montageschalenteil (7') mit je einem zugeordneten Aufnahmekanal (4') versehen ist.

4. Einrichtung nach Anspruch 1,
**dadurch gekennzeichnet, dass** die innenseitig an der Montagefläche (3) an den elastisch verformbaren Trägerspanten (9a-9c) angelenkten Aktuatoren (5a, 5b) zueinander beabstandet entlang beider einander gegenüberliegender Randbereiche (6a, 6b) der Montagefläche (3) angeordnet sind.

5. Einrichtung nach Anspruch 4,
**dadurch gekennzeichnet, dass** die Aktuatoren (5a, 5b) in der Längserstreckung nach Radialinnen ausgerichtet sind und innenseitig an einer ortsfesten Trägerkonstruktion (10) angelenkt sind.

6. Einrichtung nach Anspruch 1,
**dadurch gekennzeichnet, dass** die Aktuatoren (5a, 5b) als Pneumatikzylinder oder als elektrische Liniearantriebe ausgebildet sind.

7. Einrichtung nach Anspruch 1,
**dadurch gekennzeichnet, dass** die Montageschalenteile (7a-7c) und die diesen zusammenhaltenden Trägerspanten (9a-9c) aus einem Faserverbundwerkstoff oder einem elastischen Metallblechmaterial bestehen.

8. Verfahren zur Herstellung großflächig dreidimensional gewölbter Strukturbauteile aus einem Faserverbundwerkstoff mit einer Einrichtung nach einem der vorstehenden Ansprüche, **gekennzeichnet durch** die folgenden Verfahrensschritte:
- die Montagefläche (3, 3') der belegten und nach unten gewölbten Aufrüstvorrichtung (ARV) wird über Krafteinwirkung auf die Trägerspanten (9a-9c; 9a'-9d') nach Radialinnen verformt und **durch** Einfahren mit der korrespondierenden Laminierklebevorrichtung (LKV) zusammengebracht,
- die Montagefläche (3, 3') der eingefahrenen Aufrüstvorrichtung (ARV) wird nach außen verformt, um die Übergabe der Bauteilkomponenten an die Laminierklebevorrichtung (LKV) einzuleiten,
- die über die Montageschalenteile (7a-7c; 7') elastische Montagefläche (3, 3') der eingefahrenen Aufrüstvorrichtung (ARV) wird nach innen verformt, um die Aufrüstvorrichtung (ARV) schließlich hinterschneidungsfrei aus der Laminierklebevorrichtung (LKV) auszufahren.

9. Verfahren nach Anspruch 8,
**dadurch gekennzeichnet, dass**
- die sich in der nach oben gewölbten Ausgangslage befindliche elastisch nach Innen verformbare Montagefläche (3, 3') der Aufrüstvorrichtung (ARV) zumindest mit Bauteilkomponenten und Hilfsstoffen belegt wird,
- die belegte Aufrüstvorrichtung (ARV) anschließend evakuiert und gewendet wird, so dass diese in eine nach unten gewölbte Arbeitslage gelangt.

10. Verfahren nach Anspruch 8,
**dadurch gekennzeichnet, dass** die Bauteilkomponenten als Stringer zur Versteifung des Strukturbauteils ausgebildet sind, die in beabstandet zueinander längs verlaufenden Aufnahmekanälen (4, 4') der Montagefläche (3, 3') eingelegt werden.

11. Einrichtung nach Anspruch 8,
**dadurch gekennzeichnet, dass** die Bauteilkomponenten als Fensterrahmen zur Bildung eines Kabinenfensters ausgebildet sind, die in beabstandet zueinander in einer Reihe angeordnete ringartigen Aufnahmekanälen (4") der Montagefläche (3) eingelegt werden.

## Claims

1. A device for the production of structural components from a fiber composite material, said structural components being three-dimensionally arched over a large surface, comprising a loaded jig (AKV) having amounting surface (3, 3') which is arched towards the outside and a laminating bonding device (LKV) having a corresponding shape, wherein the jig (AKV) has receiving channels (4, 4') for the insertion of construction components and which can be loaded with auxiliary materials, wherein the loaded jig (AKV) interacts with a laminating bonding device (LKV) for forming the structural component under pressure,
**characterited in that** the mounting surface (3, 3') consists a plurality of individually elastically deformable mounting shell parts (7a-7c; 7') which are arranged adjacent to each other along at least one longitudinally extending pitch line (8a, 8b; 8') and which are attached to a plurality of elastically deformable supporting frame elements (9a-9c; 9a'-9d') that extend on the interior of the shell at a right angle to the at least one pitch line (8a, 8b), by way of which supporting frame elements (9a-9c; 9a'-9d') the mounting surface (3, 3') can be deformed by means of a plurality of actuators (5a, 5b) between an extended position (A) and at least one retracted position (B) in order to move the jig (AKV) from the laminating bonding device (LKV) relative to the receiving channels (4, 4') without undercuts.

2. The device of claim 1,
characterited in that at least some of the mounting shell parts (7a-7c; 7') comprise a plurality of receiving channels (4, 4') for stringers as a construction component.

3. The device of claim 1,
characterited in that each mounting shell part (7') comprises an associated receiving channel (4').

4. The device of claim 1,
**characterited in that** the actuators (5a, 5b) that are articulated on the inside to the mounting surface (3) to the elastically deformable supporting frame elements (9a-9c) are arranged spaced apart from each other along both opposing edge regions (6a, 6b) of the mounting surface (3).

5. The device of claim 4,
characterited in that the longitudinal extension of the actuators (5a, 5b) is aligned so as to point radially inwards, and said actuators (5a, 5b) are articulated in the interior to a stationary supporting structure (10).

6. The device of claim 1,
**characterited in that** the actuators (5a, 5b) are designed as pneumatic cylinders or as linear electrical drives.

7. The device of claim 1,
characterited in that the mounting shell parts (7a-7c) and the supporting frame elements (9a-9c) which are holding the mounting shell parts (7a-7c) together consist of a fiber composite material or an elastic sheet metal material.

8. A method for the production of structural components from a fiber composite material, said structural components being three-dimensionally arched over a large surface, comprising a device of any one of the preceding claims, **characterized by** the following method-related steps:
- the mounting surface (3, 3') of the loaded and downwards-arched jig (AKV) is deformed radially inwards by way of force acting on the supporting frame elements (9a-9c; 9a'-9d') and is brought together with the corresponding laminating bonding device (LKV) by being retracted,
- the mounting surface (3, 3') of the retracted jig (AKV) is deformed towards the outside in order to initiate the transfer of the construction components to the laminating bonding device (LKV),
- the mounting surface (3, 3') of the retracted jig (AKV), which mounting surface (3, 3') is elastic by way of the mounting shell parts (7a-7c; 7'), is deformed towards the interior in order to finally move the jig (AKV) without undercuts from the laminating bonding device (LKV).

9. The method of claim 8,
**characterited in that**
- the mounting surface (3, 3') of the jig (AKV), which mounting surface (3, 3') is in its upwards-arched home position and is deformable towards the inside, is loaded at least with construction components and auxiliary materials,
- the loaded jig (AKV) is afterwards evacuated and turned over so that it attains a downwards-arched operating position.

10. The method of claim 8,
characterited in that the construction components are designed as stringers for stiffening the structural component, which stringers can be inserted into receiving channels (4, 4') of the mounting surface (3, 3'), which receiving channels (4, 4') are spaced apart from each other and extend longitudinally to each other.

11. The device of claim 8,
characterited in that the construction components are designed as window frames to form a cabin window, which window frames can be placed into annular receiving channels (4"), which are spaced apart from each other and arranged in a row, in the mounting surface (3).

## Revendications

1. Dispositif de production d'éléments structurels à incurvation tridimensionnelle et de grande surface, réalisés dans un matériau composite renforcé de fibres, comprenant un dispositif d'équipement (ARV) garni comportant une surface de montage (3, 3') incurvée vers l'extérieur et un dispositif à encoller pour stratifiés (LKV) de forme correspondante, le dispositif d'équipement (ARV) présentant des canaux récepteurs (4, 4') destinés à l'insertion d'éléments structuraux et pouvant être garni de matières auxiliaires, pour façonner sous pression l'élément structurel par une interaction avec le dispositif à encoller pour stratifiés (LKV),
**caractérisé par le fait que** la surface de montage (3, 3') est formée de plusieurs éléments coque de montage (7a-7c ; 7') respectivement élastiquement déformables, qui sont disposés de manière mutuellement adjacente le long d'au moins une ligne de bavure (8a, 8b; 8') longitudinale et qui sont montés sur plusieurs structures de support (9a-9c; 9a'-9d') élastiquement déformables s'étendant côté intérieur de la coque transversalement à au moins une ligne de bavure (8a, 8b), par lesquels la surface de montage (3, 3') est déformable à l'aide de plusieurs actionneurs (5a, 5b) entre une position déployée (A) et au moins une position escamotée (B), pour que le dispositif d'équipement (ARV) puisse sortir du dispositif à encoller pour stratifiés (LKV) sans contre-dépouille par rapport aux canaux récepteurs (4, 4').

2. Dispositif selon la revendication 1, **caractérisé par le fait qu'**au moins une partie des éléments coque de montage (7a-7c ; 7') est équipée de plusieurs canaux récepteurs (4, 4') pour raidisseurs en tant qu'éléments structuraux.

3. Dispositif selon la revendication 1, **caractérisé par le fait que** chaque élément coque de montage (7') est doté respectivement d'un canal récepteur (4') associé.

4. Dispositif selon la revendication 1, **caractérisé par le fait que** les actionneurs (5a, 5b) articulés sur le côté intérieur de la surface de montage (3) au niveau des structures de support (9a-9c) élastiquement déformables sont disposés à distance l'un de l'autre le long des deux zones de bordure (6a, 6b) mutuellement en regard de la surface de montage (3).

5. Dispositif selon la revendication 4, **caractérisé par le fait que** les actionneurs (5a, 5b) sont orientés dans une direction longitudinale dans la direction radiale vers l'intérieur et sont articulés côté intérieur au niveau d'une construction porteuse (10) fixe.

6. Dispositif selon la revendication 1, **caractérisé par le fait que** les actionneurs (5a, 5b) sont réalisés sous la forme de cylindres pneumatiques ou d'entraînements linéaires électriques.

7. Dispositif selon la revendication 1, **caractérisé par le fait que** les éléments coque de montage (7a-7c) et les structures de support (9a-9c) maintenant ces derniers ensemble sont constitués d'un matériau composite renforcé de fibres ou d'un matériau de tôle métallique élastique.

8. Procédé de production d'éléments structurels à incurvation tridimensionnelle et de grande surface, réalisés dans un matériau composite renforcé de fibres comportant un moyen selon l'une des revendications précédentes, **caractérisé par** les étapes de procédé suivantes :
- la surface de montage (3, 3') du dispositif d'équipement (ARV) garni et incurvé vers le bas est déformée sous l'action d'une force sur les structures de support (9a-9c; 9a'-9d') dans la direction radiale vers l'intérieur et rassemblée par escamotage avec le dispositif à encoller pour stratifiés (LKV) correspondant,
- la surface de montage (3, 3') du dispositif d'équipement (ARV) escamoté est déformée vers l'extérieur, pour engager la transmission des éléments structuraux au niveau du dispositif à encoller pour stratifiés (LKV),
- la surface de montage élastique (3, 3') est déformée vers l'intérieur à l'aide des éléments coque de montage (7a-7c ; 7') élastiques du dispositif d'équipement (ARV) escamoté, pour que le dispositif d'équipement (AKV) puisse finalement sortir du dispositif à encoller pour stratifiés (LKV) sans contre-dépouille.

9. Procédé selon la revendication 8, **caractérisé par le fait que**
- la surface de montage (3, 3') élastiquement déformable vers l'intérieur se trouvant dans la position de départ incurvée vers le haut du dispositif d'équipement (ARV) est garnie au moins d'éléments structuraux et de matières auxiliaires,
- le dispositif d'équipement (ARV) garni est ensuite évacué et tourné de telle sorte que ce dernier parvient à une position de travail incurvée vers le bas.

10. Procédé selon la revendication 8, **caractérisé par le fait que** les éléments structuraux sont réalisés sous la forme de raidisseurs pour renforcer l'élément structurel, qui sont insérés dans des canaux récepteurs (4, 4') de la surface de montage (3, 3') à distance les uns des autres s'étendant longitudinalement.

11. Dispositif selon la revendication 8, **caractérisé par le fait que** les éléments structuraux sont réalisés sous la forme de châssis de fenêtre pour former une fenêtre de cabine, qui sont insérés dans des canaux récepteurs (4") de la surface de montage (3) en forme d'anneau à distance les uns des autres disposés en une rangée.
